# EUROPÄISCHE PATENTSCHRIFT

(11) **EP 0 400 585 B1**
(45) Veröffentlichungstag und Bekanntmachung des Hinweises auf die Patenterteilung: **29.12.1997**
(21) Anmeldenummer: 90110202.0
(22) Anmeldetag: 30.05.1990
(51) Int. Cl.: A01N 39/02, A01N 43/76, A01N 25/04, A01N 25/02

(54) **Flüssige herbizide Mittel**
Liquid herbicidal agents
Agents herbicides liquides

(30) Priorität: 02.06.1989 DE 3917959
(43) Veröffentlichungstag der Anmeldung: 05.12.1990
(73) Patentinhaber: Hoechst Schering AgrEvo GmbH, 13342 Berlin (DE)
(72) Erfinder: Albrecht, Konrad, Dr., D-6233 Kelkeim (Taunus) (DE); Heinrich, Rudolf, Dr., D-6233 Kelkheim (Taunus) (DE); Schumacher, Hans, Dr., D-6093 Flörsheim am Main (DE)

(56) Entgegenhaltungen:
- EP-A- 0 110 168
- EP-A- 0 144 796
- EP-A- 0 224 846
- EP-A- 0 330 904

## Beschreibung

Gegenstand der vorliegenden Erfindung sind flüssige herbizide Mittel in Form von emulgierbaren Konzentraten (EC) oder konzentrierten Emulsionen (EW), die dadurch gekennzeichnet sind, daß sie neben 1 - 40 Gew.-% des Wirkstoffs Diclofop-methyl (I), Fenoxaprop-ethyl (II), dessen optisch aktivem Isomeren (D + )Fenoxyprop-P-ethyl (111) oder Mischungen der Wirkstoffe, 0,5 bis 30 Gew.-% (C₁₀-C₁₈)-Fettalkoholpolyglykolether oder (C₈-C₉)-Alkylphenylpolyglykolether, welche 6- bis 10-fach ethoxyliert sind, als Tenside und im Falle von EC-Formulierungen 0,5 bis 7 Gew.-% (Cₛ-C₁₄)-alkylbenzolsulfonsaures Calcium und im Falle von EW-Formulierungen als Dispergiermittel 0,5 bis 7 Gew.-% eines in alpha- und omega-Stellung phosphorylierten Ethylenoxid-Propylenoxid-Ethylenoxid-Block-Copolymerisats oder dessen Salz neben den üblichen Formulierungsbestandteilen enthalten, wobei EC-Formulierungen neben den Wirkstoffen I, II, III oder deren Mischung keine weiteren herbiziden Wirkstoffe enthalten und EC-Formulierungen ausgenommen sind, welche eine Kombination des Herbizids Fenoxaprop-ethyl oder Fenoxaprop-P-ethyl mit dem Herbizid Diclofop-methyl, und als Tenside eine Kombination von Alkylphenylpolyglykolether und alkylbenzolsulfonsaures Calcium enthalten.

Die erfindungsgemäßen Mittel können neben Mischungen der Tenside auch Mischungen der genannten Wirkstoffe I/II bzw. VIII enthalten.

Bevorzugt sind 6 - 40 Gew.-% Wirkstoff, 1 - 20 Gew.-% der Polyglykolether und jeweils 1 - 5 Gew.-% an alkylbenzolsulfonsaurem Calcium und/oder phosphorylierten Block-Copolymerisaten.

Als Beispiele für die Fettalkoholpolyglykolether seien die ^{@}Genapol X-Typen (HOECHST AG) genannt, besonders solche mit der Kettenlänge C_{1O}-C₁₄, insbesondere Isotridecanolpolyglykolether. Unter (C₈-C₉)-Alkylphenylpolyglykolether sind insbesondere die ®Arkopal N-Typen (HOECHST AG) zu verstehen.

Weiterhin bedeutet alkylbenzolsulfonsaures Calcium bevorzugt solches mit der Kettenlänge C_{1O}-C₁₂, insbesondere dodecylbenzolsulfonsaures Calcium.

Als erfindungsgemäß zu verwendende phosphorylierte Ethylenoxid Propylenoxid-Ethylenoxid-Block-Copolymerisate kommen insbesondere solche der Formel IV und deren Salze infrage, 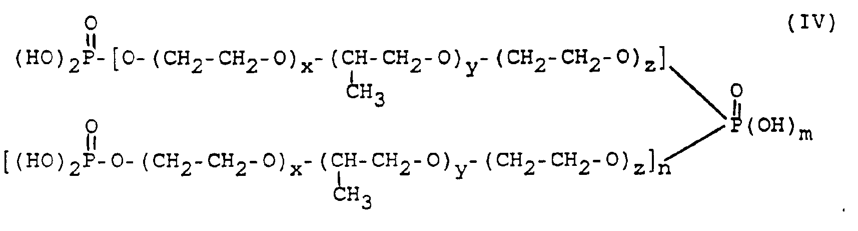 worin x, y, z = unabhängig voneinander eine Zahl von 2 bis 200 und m, n = 0, 1 oder 2 bedeuten, wobei die Summe n+m = 2 sein muß.

Bevorzugtbesitzen x und y gleiche Bedeutung und stehen insbesondere für eine Zahl von 30 bis 100; y bedeutet insbesondere eine Zahl von 20 bis 100 und n = insbesondere O. Diese Blockpolymere können als Gemische eingesetzt werden. Ihre Herstellung wird in JA-A 7247982 oder in DE-A 3542441 beschrieben.

Als Salze kommen insbesondere die Alkali-, Erdalkali-, Ammonium-, Mono-, Di- oder Trialkylammonium- oder Mono-, Di- oder Trialkanolammoniumsalze infrage. Diese besitzen insbesondere 1 bis 5 C-Atome im Alkyl bzw. Alkanolteil.

Die Verbindungen der Formeln 1 und II sind bekannt und in "The Pesticide Manual" 8th edition, British Crop Protection Council, 1987 beschrieben. Die Verbindung III läßt sich aus II nach bekannten Methoden herstellen.

Die Verbindung I besitzt ausgezeichnete selektive herbizide Wirkungen gegen Umkräuter in Kulturpflanzen. Die Verbindungen II und III sind im Vor- und Nachauflaufverfahren ausgezeichnet wirksam gegen ein breites Spektrum von Schadgräsern, wobei sie von zweikeimblättrigen Kulturpflanzen sowie einigen Getreidearten und Reis toleriert werden.

Es ist bekannt, daß sich die Wirksamkeit von Herbiziden in manchen Fällen dadurch verbessern läßt, daß man die Wirkstoffe mit oberflächenaktiven Stoffen oder Ölen bzw. beiden vermischt. Die gelingt z.B. bei nichtselektiven Herbiziden wie Paraquat, Glyphosate oder Glufosinate (EP-A 0 048 436, 0 290 416, 0 268 574). Schwieriger ist das Auffinden wirkungsverstärkender Zusatzstoffe bei selektiven Herbiziden. Wenn überhaupt wirkungsverstärkende Stoffe gefunden werden, so können selektive Herbizide aber phytotoxische Eigenschaften erhalten, d.h. ihre Selektivität gegen bestimmte Nutzpflanzen verlieren und damit auch die Vorteile, die diese modernen Wirkstoffe bieten sollen (vgl. TE. Whitmore in Farm Chemicals 2/1985, Seite 18 - 21 sowie P.M. Neumann und K. Prinz in J. Sci. Fd. Agric. 1975 25, S. 221 - 226 und US 4 084 956). Nach US 4 084 956 vertiert Barban durch kurzkettige flüssige Tenside seine Selektivität, die Wirkung konnte aber durch feste, wachsartige oberflächenaktive Substanzen unter Beibehaltung der Selektivität verbessert werden. Wenn überhaupt Wirkungssteigerungen durch Tenside erreicht werden können, so sprechen offenbar jeweils spezielle Substanzen spezifisch auf bestimmte Wirkstoffe an. So ist z. B. aus DE-A 2 554 532 bekannt, daß die herbizide Wirkung von 3-(p-Chlorphenyl)-2 chlor-propionsäuremethylester nur durch einen bestimmten Dodecylpolyglykoläther in Gegenwart von Paraffinölen verbessert werden kann. Dagegen gelang es z.B. nicht die Wirkung von Benzoylprop-ethyl durch Tenside zu steigern (Zeitschrift für Pflanzenkrankheiten und Pflanzenschutz, Hohenheim, Sonderheft VII (1975). Meist wird die Verträglichkeit wirksamer Tenside für selektive Herbizide sehr stark von Klima und Boden beeinflußt, so daß wirkungsverstärkende Zusatzstoffe wegen solcher Risiken in den meisten Fällen nur in bestimmten Klimazonen angewandt werden können.

EP-A-0 330 904 (veröffentlicht am 06.09.1989) betrifft Mikroemulsionen für Mischherbizide vom Typ Benta- zon/Phenoxy(Heteroaryloxy)-phenoxycarboxylat mit einer bestimmten Kombination von Tensiden und einem verhältnismäßig hohen Gehalt an Wasser.

EP-A-0 144 796 betrifft im wesentlichen synergistische Herbizidkombinationen von Herbiziden des Typs Phen- oxy(Heteroaryloxy)-phenoxycarbonsäuren und Fluroxypyr oder Hydroxybenzonitrilherbiziden wie Bromoxynil und loxynil. Die Beschreibung enthält außerdem einen allgemein gehaltenen Teil über technische Möglichkeiten, die synergistischen Kombinationen auf die Anbaufläche zu applizieren. Die dabei einzeln genannten Formulierungshilfsmittel für EC-Formulierungen lassen eine Vielzahl von theoretisch möglichen Kombinationen zu.

EP-A-0 110 168 betrifft im wesentlichen synergistische Herbizidkombinationen der Herbizide Fenoxaprop-ethyl und Diclofop-methyl. Die Beschreibung enthält keine Angaben zu den Mengenverhältnissen der Tenside in EC-Formulierungen und der Tenside untereinander.

Es wurde nun überraschenderweise gefunden, daß sich die herbizide Wirksamkeit der Wirkstoffe I - III unter Erhaltung ihrer Selektivität auch unter verschiedenen Klimabedingungen deutlich verbessern läßt, wenn man diese in Form der erfindungsgemäßen Mittel (Formulierungen) einsetzt. Diese Formulierungen können neben den üblichen Lösungsmitteln (ca. 5 - 70 Gew.-%) wie aromatischen Erdöldestillaten (^{@}Solvesso 150, ^{@}Solvesso 200; Exxon Chem.), Xylol, Cyclohexanon, Dimethylformamid, N-Methylpyrrolidon, Phthalsäureester oder deren Gemische, ca. 2 - 15 Gew.-% der üblichen Emulgatoren wie Rizinusölethoxylate, Fettaminethoxylate, Fettalkoholpolyglykolethersulfonsäure-Salze als Beispiel für anionische Tenside, Polyoxyethylen- und Polyoxypropylenblockpolymere und entsprechende Blockcopolymere und im Falle von EW-Formulierungen ca. 5 - 40 Gew.-% Wasser und ca. 0 - 15 Gew.-% Frostschutzmittel wie Glycerin, Glykole (Ethylen-, Propylenglykol oder deren Monomethylether) oder Harnstoff enthalten.

Zur Stabilisierung der Wirkstoffe gegen Hydrolyse oder eine Racemisierung im Falle von III können die Präparate noch Stabilisatoren wie epoxydiertes Soja- oder Leinöl oder aliphatische Ester, im Falle von EW's auch anorganische oder organische Säuren oder Basen zwecks Einhaltung eines bestimmten pH-Wertes enthalten.

Die obengenannten Formulierungsbestandteile werden beispielsweise beschrieben in:
Watkins, "Handbook of Insecticide Dust Diluents and Carriers", 2nd Ed., Darland Books, Caldwell N.J., H.v.Olphen, "Introduction to Clay Colloid Chemistry", 2nd Ed., J. Willey & Sons, N.Y; Marschen, "Solvents Guide", 2nd Ed., Interscience, N.Y 1950; McCutcheon's, "Detergents and Emulsifiers Annual", MC Publ. Corp., Ridgewood N.J.; Sisley and Wood, "Encyclopedia of Surface Active Agents", Chem Publ. Co. Inc, N.Y 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Die erfindungsgemäßen EC- und EW-Formulierungen können in an sich bekannter Weise hergestellt werden.
EC: Der oder die Wirkstoffe werden in den beschriebenen Lösungsmitteln gelöst (evtl. unter Zusatz der erwähnten Emulgatoren) und unter intensivem Rühren werden die erfindungsgemäßen Netzmittel, alkylbenzolsulfonsaures Calcium und die übrigen Formulierungsbestandteile zugegeben (vgl. Tabelle 1).
EW: Die wirkstofflösung (evtl. mit Emulgator) und die beschriebenen Netzmittel werden innig vermischt, und diese Mischung wird in eine wäßrige Phase eingerührt, welche die erfindungsgemäßen Blockpolymere enthält. Danach werden die restlichen Bestandteile zugegeben (vgl. Tabelle 1 und EP-A 224 846, 118 759).

In der Tabelle 1 sind Zusammensetzungen von EC- und EW-Formulierungen der Wirksubstanzen I, II und III aufgeführt. Die Formulierungen Nr. 2, 5, 7, 8, 12, 15 wurden nach üblichen Methoden zubereitet, die Formulierungen 1, 3, 4, 6, 9, 10, 11, 13, 14, 16 sind erfindungsgemäße Zubereitungen.

Die überraschend hohe Verbesserung der herbiziden Wirksamkeit der beanspruchten Zubereitungen geht aus den Ergebnissen der Tabelle 2 hervor. Die Ergebnisse wurden in Versuchen, die wiederholt in unterschiedlichen Klimazonen wie Europa, Kanada, Brasilien durchgeführt wurden, abgesichert. Ganz überraschend ist dabei, daß die beanspruchten Zubereitungen trotz der höheren Gehalte an Zusatzstoffen keine Schäden bei den zu schützenden Kulturpflanzen, z.B. an Weizen, Rüben, Sojabohnen hervorrufen. Dadurch kann die Aufwandmenge/ha an Wirkstoff nachhaltig gesenkt werden, was zu einer Verbilligung des Pflanzenschutzmittels und zu geringerer Umweltbelastung führt.

Die Applikationskosten können gesenkt und zusätzliche Applikationen können eingespart werden, wenn es gelingt, Zubereitungen der Verbindungen I, 11, III aufzufinden, die so stabile wäßrige Emulsionen bilden, daß in diese noch weitere Pflanzenschutzmittel, z.B. Fungizide zur gleichzeiten Bekämpfung von Pilzbefall, oder Herbizide zwecks Verbreiterung der biologischen Wirksamkeit oder Düngemittel eingemischt werden können. Mit einer Spritzung kann der Landwirt dann mehrere Ziele erreichen. Sehr oft jedoch "brechen" die Emulsionen beim Zumischen weiterer Pflanzenschutzmittel oder Düngemittel. Die Emulsionen "ölen" aus, d.h. die in Wasser emulgiertem Tröpfchen der Pflanzenschutzformulierungen agglomerieren zu groben Tropfen, die sich dann abscheiden und zur Phasentrennung führen. Beim Zumischen von Spritzpulvern kommt es zusätzlich sehr häufig zu Ausflockungen und ebenfalls zu Agglomerationen der in diesen Fällen feinen, festen Wirkstoffpartikel des zugemischten Präparates, die bevorzugt große Mengen der emulgierten Wirkstoffe miteinschließen. Derartige Spritzbrühen sind dann nicht verwendbar, da eine gleichmäßige Wirkstoffverteilung beim Spritzen nicht gewährleistet ist. Minderwirkungen auf der einen und gleichzeitig Schäden durch Überkonzentrationen an Wirkstoff auf der anderen Seite wären die Folge.

Aufgrund der deutlich verbesserten Mischungseigenschaften der erfindungsgemäßen Mittel mit handelsüblichen Wirkstofformulierungen lassen sich die obengenannten Vorteile einfach realisieren (vgl. Tabelle 3). Die angegebenen Mittelkonzentrationen entsprechen der üblichen Feldpraxis. Für die Mischbarkeitsprüfung blieben die Spritzbrühen in Meßzylindern bei 20 - 22°C 6 Stunden erschütterungsfrei stehen.

Darüberhinaus zeichnen sich die beanspruchten Formulierungen durch eine sehr gute Mischbarkeit mit Wasser selbst in sehr hohen Anwendungskonzentrationen aus (vgl. Tabelle 4). Diese gegenüber bekannten Formulierungen erhöhte Mischbarkeit ermöglicht die Applikation der erfindungsgemäßen Mittel bereits mit sehr kleinen Spritzbrühemengen/ha. Dadurch werden z.B. zur Herstellung der fertigen Spritzbrühen nur Wasseraufwandmengen von 20 - 60 l/ha benötigt. Dadurch können bei einer Spritzung sehr große Flächen behandelt werden. Dies ist insbesondere für eine Applikation vom Flugzeug aus wichtig.

Vor der Applikation werden die erfindungsgemäßen Mittel mit Wasser auf die jeweils erwünschte Anwendungskonzentration verdünnt. Je nach Indikation und technischer Ausrüstung schwanken die Wasseraufwandmengen in einem weiten Bereich. Allgemein beträgt die Wasseraufwandmenge/ha ca. 20 - 600 I, meist 200 - 400 I.

Zusammenfassend bedeutet dies, daß die erfindungsgemäßen Mittel gegenüber dem Stand der Technik durch gesteigerte Aktivität der Wirkstoffe unter Erhaltung deren Selektivität, deutlich verbesserte Mischungseigenschaften mit bekannten Wirkstofformulierungen und Wasser und durch erhöhte Stabilität und Lagerbeständigkeit gekennzeichnet sind.

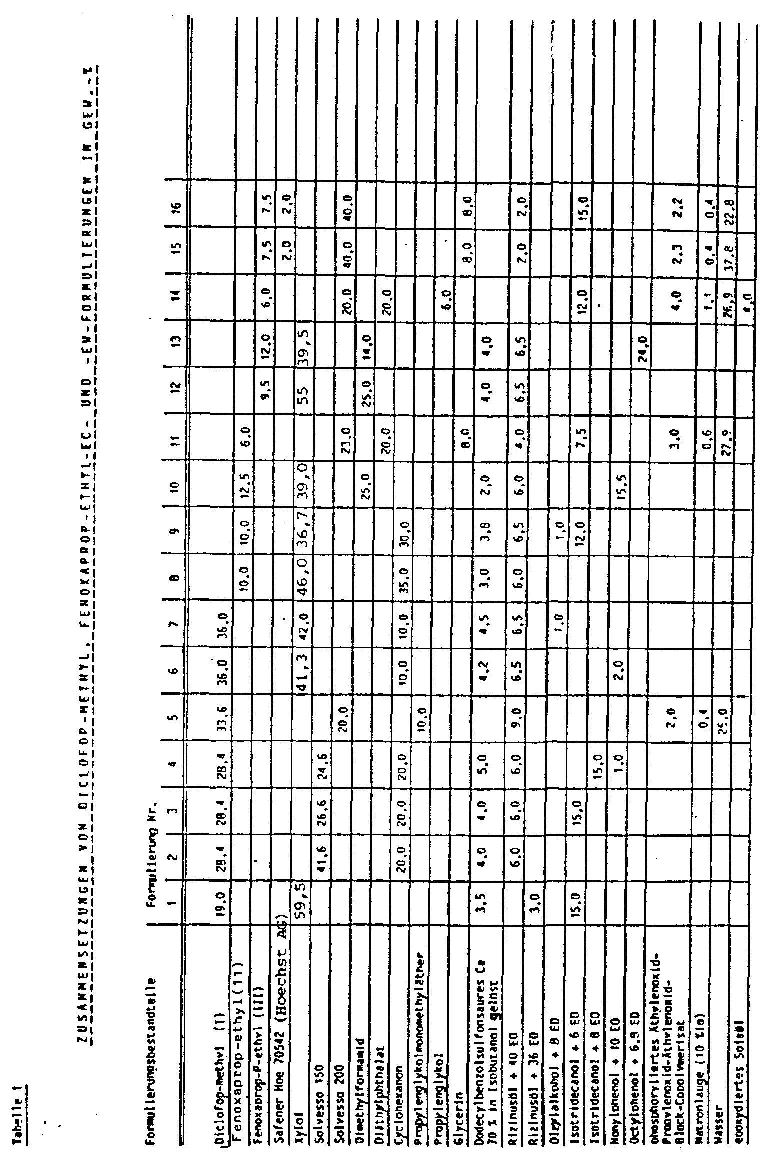

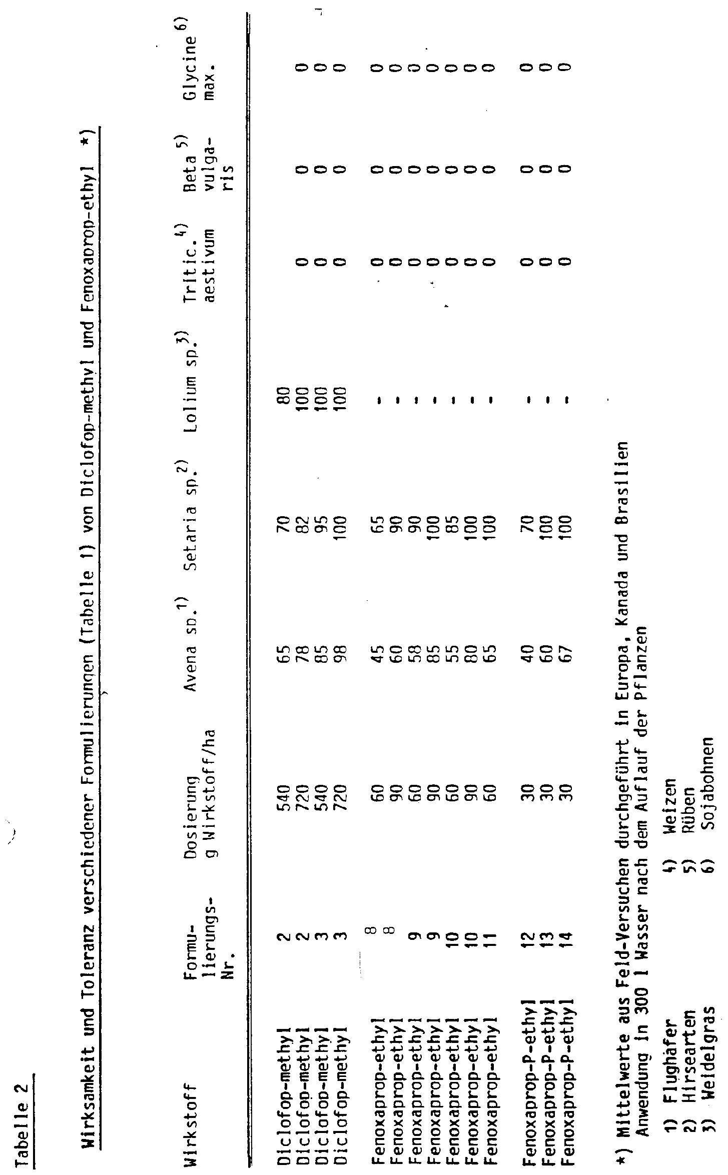

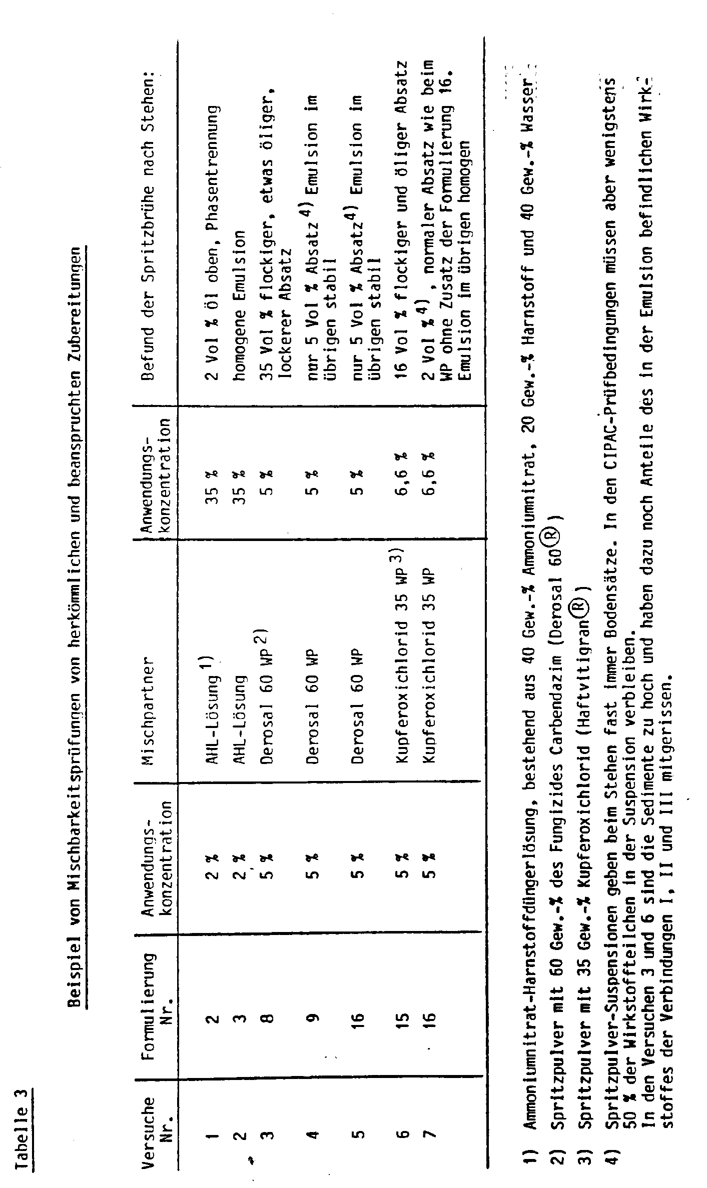

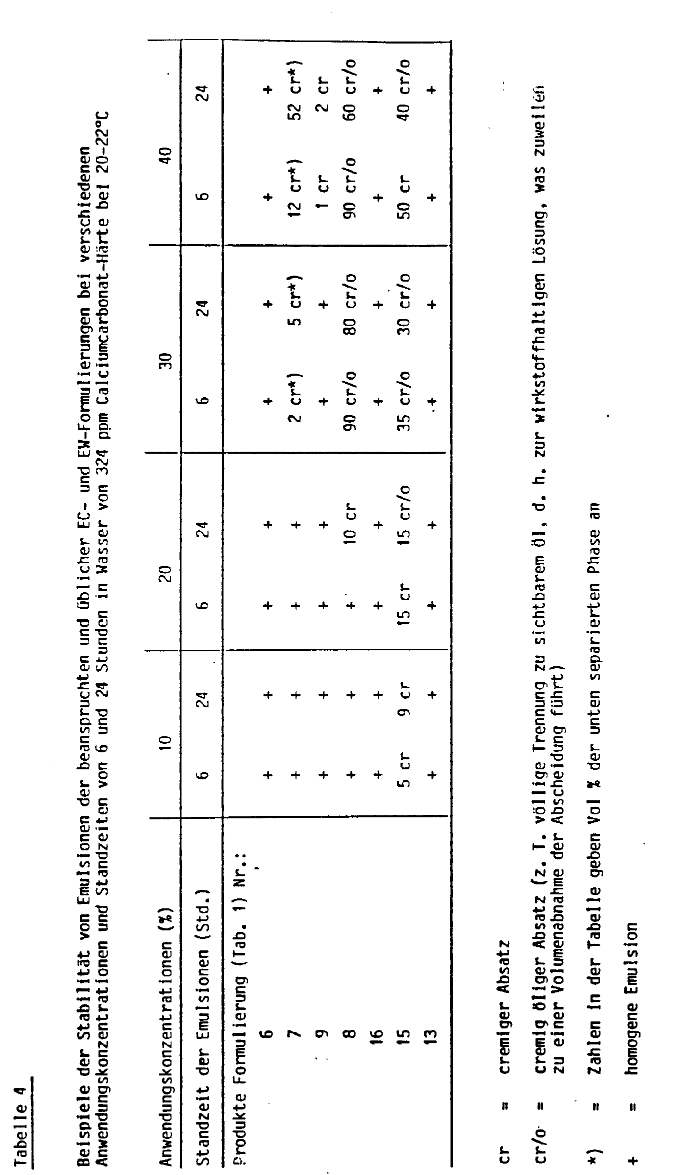

## Patentansprüche (Patentansprüche für folgende(n) Vertragsstaat(en) : AT, BE, CH, DE, DK, FR, GB, GR, IT, LI, NL, SE)

1. Herbizide Mittel in Form von emulgierbaren Konzentraten (EC) oder konzentrierten Emulsionen (EW), dadurch gekennzeichnet, daß sie neben
1 bis 40 Gew.-% des Wirkstoffs Diclofop-methyl (I), Fenoxaprop-ethyl (II), dessen optisch aktivem Isomeren (D+)Fenoxaprop-P-ethyl (111) oder Mischungen der Wirkstoffe,
0,5 bis 30 Gew.-% (C₁₀-C₁₈)-Fettalkoholpolyglykolether oder (C_{$}-C₉)-Alkylphenylpolyglykolether, welche 6- bis 10-fach ethoxyliert sind, als Tenside und
im Falle von EC-Formulierungen 0,5 bis 7 Gew.-% (C₈-C₁₄)-alkylbenzolsulfonsaures Calcium und
im Falle von EW-Formulierungen als Dispergiermittel 0,5 bis 7 Gew.-% eines in alpha- und omega-Stellung phosphorylierten Ethylenoxid-Propylenoxid-Ethylenoxid-Block-Copolymersiats oder dessen Salz neben den üblichen Formulierungsbestandteilen enthalten,
wobei EC-Formulierungen neben den Wirkstoffen I, II, III oder deren Mischung keine weiteren herbiziden Wirkstoffe enthalten und
EC-Formulierungen ausgenommen sind, welche eine Kombination des Herbizids Fenoxaprop-ethyl oder Fenoxaprop-P-ethyl mit dem Herbizid Diclofop-methyl, und als Tenside eine Kombination von Alkylphenylpolyglykolether und alkylbenzolsulfonsaures Calcium enthalten.

2. Mittel gemäß Anspruch 1, dadurch gekennzeichnet, daß sie als Tenside (C₁₀-C₁₄)-Fettalkoholpolyglykolether, welche 6 - 10-fach ethoxyliert sind, enthalten.

3. Mittel gemäß Anspruch 1 oder 2, dadurch gekennzeichnet, daß sie als Tensid Isotridecanolpolyglykolether, welcher 6 - 10-fach ethoxyliert ist, enthalten.

4. Mittel gemäß einem oder mehreren der Ansprüche 1 - 3, dadurch gekennzeichnet, daß sie im Fall von EC-Formulierungen (C₁₀-C₁₂)-alkylbenzolsulfonsaures Calcium enthalten.

5. Mittel gemäß einem oder mehreren der Ansprüche 1 - 4, dadurch gekennzeichnet, daß sie im Fall von EC-Formulierungen dodecylbenzolsulfonsaures Calcium enthalten.

6. Mittel gemäß einem oder mehreren der Ansprüche 1 - 3, dadurch gekennzeichnet, daß sie im Fall von EW-Formulierungen als Dispergiermittel ein Blockcopolymerisat der Formel IV 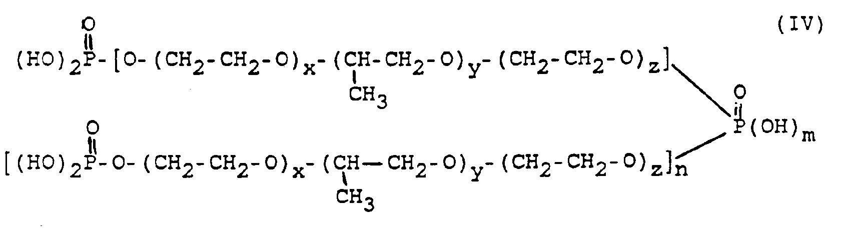 worin x, y, z = unabhängig voneinander eine Zahl von 2 bis 200 und m, n = 0, 1 oder 2 bedeuten, wobei die Summe n+m = 2 sein muß, enthalten.

7. Verfahren zur Bekämpfung von Schadpflanzen, dadurch gekennzeichnet, daß man auf diese oder die Anbaufläche eine wirksame Menge eines herbiziden Mittels gemäß einem oder mehreren der Ansprüche 1 - 6 appliziert.

8. Verwendung eines herbiziden Mittels gemäß einem oder mehreren der Ansprüche 1 - 6 zur Bekämpfung von Schadpflanzen.

9. Verwendung von Tensiden zur Wirkungssteigerung des Herbizids Diclofopmethyl (I), Fenoxaprop-ethyl (II) oder Fenoxaprop-P-ethyl (III), dadurch gekennzeichnet, daß neben 1 bis 40 Gewichtsteilen Herbizid als Tenside 0,5 bis 30 Gewichtsteile (C₁₀-C₁₈)-Fettalkoholpolyglykolether oder (C₈-C₉)-Alkylphenylpolyglykolether, welche 6 bis 10- fach ethoxyliert sind, und 0,5 bis 7 Gewichtsteile (C_{S}-C₁₄)-alkylbenzolsulfonsaures Calcium oder 0,5 bis 7 Gewichtsteile eines in alpha- und omega-Stellung phosphorylierten Ethylenoxid-Propylenoxid-Ethylenoxid-Block-copolymerisats oder dessen Salz eingesetzt werden.

## Patentansprüche (Patentansprüche für folgende(n) Vertragsstaat(en) : ES)

1. Verfahren zur Bekämpfung von Schadpflanzen, dadurch gekennzeichnet, daß man auf diese oder die Anbaufläche eine wirksame Menge eines herbiziden Mittels in Form von emulgierbaren Konzentraten (EC) oder konzentrierten Emulsionen (EW), dadurch gekennzeichnet, daß sie neben
1 bis 40 Gew.-% des Wirkstoffs Diclofop-methyl (I), Fenoxaprop-ethyl (II), dessen optisch aktivem Isomeren (D+)Fenoxaprop-P-ethyl (III) oder Mischungen der Wirkstoffe,
0,5 bis 30 Gew.-% (C₁₀-C₁₈)-Fettalkoholpolyglykolether oder (C₈-C₉)-Alkylphenylpolyglykolether, welche 6- bis 10-fach ethoxyliert sind, als Tenside und
im Falle von EC-Formulierungen 0,5 bis 7 Gew.-% (C₈-C₁₄)-alkylbenzolsulfonsaures Calcium und
im Falle von EW-Formulierungen als Dispergiermittel 0,5 bis 7 Gew.-% eines in alpha- und omega-Stellung phosphorylierten Ethylenoxid-Propylenoxid-Ethylenoxid-Block-Copolymersiats oder dessen Salz neben den üblichen Formulierungsbestandteilen enthalten, appliziert,
wobei EC-Formulierungen neben den Wirkstoffen I, II, III oder deren Mischung keine weiteren herbiziden Wirkstoffe enthalten und
EC-Formulierungen ausgenommen sind, welche eine Kombination des Herbizids Fenoxaprop-ethyl oder Fenoxaprop-P-ethyl mit dem Herbizid Diclofop-methyl, und als Tenside eine Kombination von Alkylphenylpolyglykolether und alkylbenzolsulfonsaures Calcium enthalten.

2. Verfahren gemäß Anspruch 1, dadurch gekennzeichnet, daß die herbiziden Mittel als Tenside (C₁₀-C₁₄)-Fettalkoholpolyglykolether, welche 6 - 10-fach ethoxyliert sind, enthalten.

3. Verfahren gemäß Anspruch 1 oder 2, dadurch gekennzeichnet, daß die herbiziden Mittel als Tensid Isotridecanolpolyglykolether, welcher 6 - 10-fach ethoxyliert ist, enthalten.

4. Verfahren gemäß einem oder mehreren der Ansprüche 1 - 3, dadurch gekennzeichnet, daß die herbiziden Mittel im Fall von EC-Formulierungen (C₁ₒ-C₁₂)-alkylbenzolsulfonsaures Calcium enthalten.

5. Verfahren gemäß einem oder mehreren der Ansprüche 1 - 4, dadurch gekennzeichnet, daß die herbiziden Mittel im Fall von EC-Formulierungen dodecylbenzolsulfonsaures Calcium enthalten.

6. Verfahren gemäß einem oder mehreren der Ansprüche 1 - 3, dadurch gekennzeichnet, daß die herbiziden Mittel im Fall von EW-Formulierungen als Dispergiermittel ein Blockcopolymerisat der Formel IV 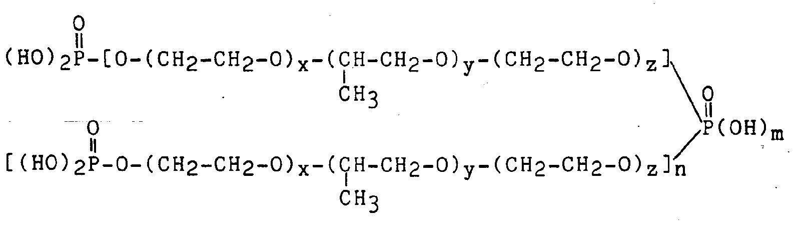 worin x, y, z = unabhängig voneinander eine Zahl von 2 bis 200 und m, n = 0, 1 oder 2 bedeuten, wobei die Summe n+m = 2 sein muß, enthalten.

7. Verwendung von Tensiden zur Wirkungssteigerung des Herbizids Diclofop-methyl (I), Fenoxaprop-ethyl (11) oder Fenoxaprop-P-ethyl (111), dadurch gekennzeichnet, daß neben 1 bis 40 Gewichtsteilen Herbizid als Tenside 0,5 bis 30 Gewichtsteile (C₁₀-C₁₈)-Fettalkoholpolyglykolether oder (C_{$}-C₉)-Alkylphenylpolyglykolether, welche 6 bis 10- fach ethoxyliert sind, und 0,5 bis 7 Gewichtsteile (C₈-C₁₄)-alkylbenzolsulfonsaures Calcium oder 0,5 bis 7 Gewichtsteile eines in alpha- und omega-Stellung phosphorylierten Ethylenoxid-Propylenoxid-Ethylenoxid-Block-copolymerisats oder dessen Salz eingesetzt werden.

## Claims (Claims for the following Contracting State(s) : AT, BE, CH, DE, DK, FR, GB, GR, IT, LI, NL, SE)

1. A herbicidal composition in the form of an emulsifiable concentrate (EC) or concentrated emulsion (EW), which comprises, in addition to
1 to 40 % by weight of the active substance diclofop-methyl (I), fenoxaprop-ethyl (II), its optically active isomer (D+)fenoxaprop-P-ethyl (III) or mixtures of the active substances,
0.5 to 30 % by weight of (C₁₀-C₁₈)-fatty alcohol polyglycol ethers or (C₈-C₉)-alkylphenyl polyglycol ethers which are hexa- to decaethoxylated, as surfactants, and
in the case of EC formulations, 0.5 to 7 % by weight of calcium (C₈-C₁₄)-alkylbenzenesulfonate and
in the case of EW formulations, as dispersant, 0.5 to 7 % by weight of an ethylene oxide/propylene oxide/ethylene oxide block copolymer phosphorylated in the alpha and omega position, or a salt thereof,
in addition to the customary formulation components, where EC formulations in addition to the active substances I, II, III or mixtures of these do not comprise any further herbicidally active substances, and with the exception of EC formulations which comprise a combination of the herbicide fenoxaprop-ethyl or fenoxaprop-P-ethyl with the herbicide diclofop-methyl, and, as surfactants, a combination of alkylphenyl polyglycol ethers and calcium alkylbenze- nesulfonate.

2. A composition as claimed in claim 1, which comprises, as surfactants, (C₁₀-C₁₄)-fatty alcohol polyglycol ethers which are hexa- to decaethoxylated.

3. A composition as claimed in claim 1 or 2, which comprises, as surfactant, isotridecanol polyglycol ether which is hexa- to decaethoxylated.

4. A composition as claimed in one or more of claims 1 - 3, which comprises, in the case of EC formulations, calcium (C₁₀-C₁₂)-alkylbenzenesulfonate.

5. A composition as claimed in one or more of claims 1 - 4, which comprises, in the case of EC formulations, calcium dodecylbenzenesulfonate.

6. A composition as claimed in one or more of claims 1 - 3, which comprises, in the case of EW formulations, as dispersant, a block copolymer of the formula IV 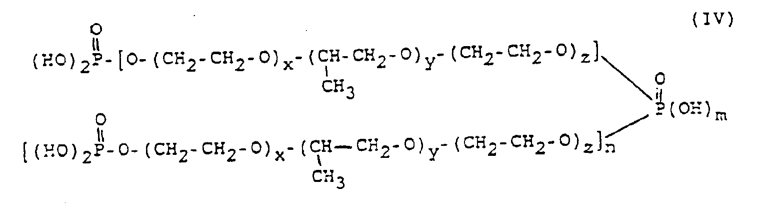 where x, y, z independently of one another are a number from 2 to 200 and m, n are 0, 1 or 2, where the total of n+m must be 2.

7. A method of controlling harmful plants which comprises applying, to these harmful plants or the area under cultivation, an effective amount of a herbicidal composition as claimed in one or more of claims 1 - 6.

8. The use of a herbicidal composition as claimed in one or more of claims 1 - 6 for controlling harmful plants.

9. Use of surfactants for increasing the activity of the herbicide diclofop-methyl (I), fenoxaprop-ethyl (II) or fenoxaprop-P-ethyl (III), which comprises employing, in addition to 1 to 40 parts by weight of herbicide, as surfactants 0.5 to 30 parts by weight of (C₁₀-C₁₈)-fatty alcohol polyglycol ethers or (C₈-C₉)-alkylphenyl polyglycol ethers which are hexa- to decaethoxylated, and 0.5 to 7 parts by weight of calcium (C₈-C₁₄)-alkylbenzenesulfonate or 0.5 to 7 parts by weight of an ethylene oxide/propylene oxide/ethylene oxide block copolymer phosphorylated in the alpha and omega position or a salt thereof.

## Claims (Claims for the following Contracting State(s) : ES)

1. A method of controlling harmful plants, which comprises applying, to these harmful plants or the area under cultivation, an effective amount of a herbicidal composition in the form of an emulsifiable concentrate (EC) or concentrated emulsion (EW), which comprises, in addition to
1 to 40 % by weight of the active substance diclofop-methyl (I), fenoxaprop-ethyl (II), its optically active isomer (D+)fenoxaprop-P-ethyl (III) or mixtures of the active substances,
0.5 to 30 % by weight of (C₁₀-C₁₈)-fatty alcohol polyglycol ethers or (C₈-C₉)-alkylphenyl polyglycol ethers which are hexa- to decaethoxylated, as surfactants, and
in the case of EC formulations, 0.5 to 7 % by weight of calcium (C₈-C₁₄)-alkylbenzenesulfonate and
in the case of EW formulations, as dispersant, 0.5 to 7 % by weight of an ethylene oxide/propylene oxide/ethylene oxide block copolymer phosphorylated in the alpha and omega position, or a salt thereof,
in addition to the customary formulation components, where EC formulations in addition to the active substances I, II, III or mixtures of these do not comprise any further herbicidally active substances, and with the exception of EC formulations which comprise a combination of the herbicide fenoxaprop-ethyl or fenoxaprop-P-ethyl with the herbicide diclofop-methyl, and, as surfactants, a combination of alkylphenyl polyglycol ethers and calcium alkylbenze- nesulfonate.

2. The method as claimed in claim 1, wherein the herbicidal compositions comprise, as surfactants, (C₁₀-C₁₄)-fatty alcohol polyglycol ethers which are hexa- to decaethoxylated.

3. The method as claimed in claim 1 or 2, wherein the herbicidal compositions comprise, as surfactant, isotridecanol polyglycol ether which is hexa- to decaethoxylated.

4. The method as claimed in one or more of claims 1 - 3, wherein the herbicidal compositions comprise, in the case of EC formulations, calcium (C₁₀-C₁₂)-alkylbenzenesulfonate.

5. The method as claimed in one or more of claims 1 - 4, wherein the herbicidal compositions comprise, in the case of EC formulations, calcium dodecylbenzenesulfonate.

6. The method as claimed in one or more of claims 1 - 3, wherein the herbicidal compositions comprise, in the case of EW formulations, as dispersant, a block copolymer of the formula IV 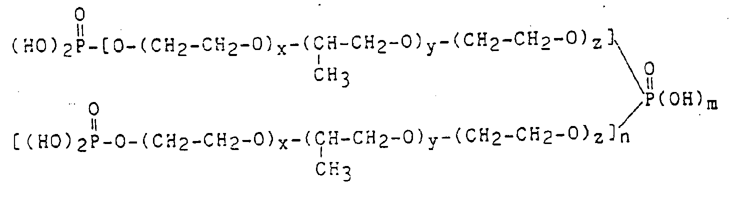 where x, y, z independently of one another are a number from 2 to 200 and m, n are 0, 1 or 2, where the total of n+m must be 2.

7. Use of surfactants for increasing the activity of the herbicide diclofop-methyl (I), fenoxaprop-ethyl (II) or fenoxaprop-P-ethyl (III), which comprises employing, in addition to 1 to 40 parts by weight of herbicide, as surfactants 0.5 to 30 parts by weight of (C₁₀-C₁₈)-fatty alcohol polyglycol ethers or (C₈-C₉)-alkylphenyl polyglycol ethers which are hexa- to decaethoxylated, and 0.5 to 7 parts by weight of calcium (C₈-C₁₄)-alkylbenzenesulfonate or 0.5 to 7 parts by weight of an ethylene oxide/ propylene oxide/ethylene oxide block copolymer phosphorylated in the alpha and omega position or a salt thereof.

## Revendications (Revendications pour l'(les) Etat(s) contractant(s) suivant(s) : AT, BE, CH, DE, DK, FR, GB, GR, IT, LI, NL, SE)

1. Compositions herbicides sous forme de concentrés émulsionnables (EC) ou d'émulsions concentrées (EW), caractérisées en ce que, outre
1 à 40 % en masse du produit actif diclofop-méthyle (I), fenoxaprop-éthyle (II), de son isomère optiquement actif (D+)fenoxaprop-P-éthyle (III) ou d'un mélange des produits actifs,
elles contiennent
0,5 à 30 % en masse d'éthers polyglycoliques d'alcools gras en C₁₀-C₁₈ ou d'éthers polyglycoliques d'(alkyl en C₈-C₉)phényle, qui sont éthoxylés 6 à 10 fois, comme agents tensioactifs et,
dans le cas de formulations de type EC,
0,5 à 7 % en masse d'un (alkyl en C₈-C₁₄)benzènesulfonate de calcium, et, dans le cas de formulations de
type EW, comme agent dispersant;
0,5 à 7 % en masse d'un copolymère à blocs oxyde d'éthylène-oxyde de propylène-oxyde d'éthylène phosphorylé en position a et ω ou d'un de ses sels,
en plus des constituants classiques de formulations,
les formulations de type EC ne contenant pas d'autres produits herbicides en plus des produits actifs i, II, III ou de leur mélange,
et les formulations de type EC qui contiennent une combinaison de l'herbicide fenoxaprop-éthyle ou fenoxaprop-P-éthyle avec l'herbicide diclofop-méthyle, et comme agents tensioactifs une combinaison d'éther polyglycolique d'alkylphényle et d'alkylbenzènesulfonate de calcium, étant exclues.

2. Compositions selon la revendication 1, caractérisées en ce qu'elles contiennent comme agents tensioactifs des éthers polyglycoliques d'alcools gras en C₁₀-C₁₄ éthoxylés 6 à 10 fois.

3. Compositions selon la revendication 1 ou 2, caractérisées en ce qu'elles contiennent comme agent tensioactif un éther polyglycolique d'isotridécanol éthoxylé 6 à 10 fois.

4. Compositions selon l'une ou plusieurs des revendications 1 à 3, caractérisées en ce que, dans le cas de formulations de type EC, elles contiennent un (alkyl en C₁₀-C₁₂)benzènesulfonate de calcium.

5. Compositions selon l'une ou plusieurs des revendications 1 à 4, caractérisées en ce que, dans le cas de formulations de type EC, elles contiennent du dodécylbenzènesulfonate de calcium.

6. Compositions selon l'une ou plusieurs des revendications 1 à 3, caractérisées en ce que, dans le cas de formulations de type EW, elles contiennent comme agent dispersant un copolymère à blocs de formule IV 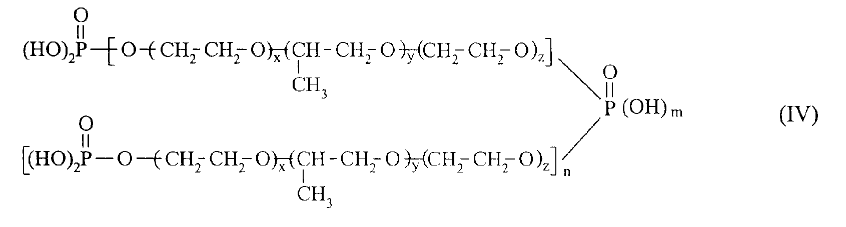 dans laquelle x, y et z sont indépendamment l'un de l'autre un nombre de 2 à 200 et m et n sont égaux à 0, 1 ou 2, le somme n+m devant être égale à 2.

7. Procédé de lutte contre les plantes nuisibles, caractérisé en ce que l'on applique sur ces plantes ou sur la surface cultivée une quantité efficace d'une composition herbicide selon l'une ou plusieurs des revendications 1 à 6.

8. Utilisation d'une composition herbicide selon l'une ou plusieurs des revendications 1 à 6 pour la lutte contre les plantes nuisibles.

9. Utilisation d'agents tensioactifs pour augmenter l'activité de l'herbicide diclofop-méthyle (1), fenoxaprop-éthyle (II) ou (D+)fenoxaprop-P-éthyle (III), caractérisée en ce que, en plus de 1 à 40 parties en masse d'herbicide, on utilise comme agents tensioactifs 0,5 à 30 parties en masse d'éthers polyglycoliques d'alcools gras en C₁₀-C₁₈ ou d'éthers polyglycoliques d'(alkyl en C₈-Cg)phényle, qui sont éthoxylés 6 à 10 fois, et 0,5 à 7 parties en masse d'un (alkyl en C₈-C₁₄)benzènesulfonate de calcium ou 0,5 à 7 parties en masse d'un copolymère à blocs oxyde d'éthylène-oxyde de propylène-oxyde d'éthylène phosphorylé en position a et ω ou d'un de ses sels.

## Revendications (Revendications pour l'(les) Etat(s) contractant(s) suivant(s) : ES)

1. Procédé de lutte contre les plantes nuisibles, caractérisé en ce que l'on applique sur ces plantes ou sur la surface cultivée une quantité efficace d'une composition herbicide sous forme de concentrés émulsionnables (EC) ou d'émulsions concentrées (EW), caractérisée en ce que, outre
1 à 40 % en masse du produit actif diclofop-méthyle (1), fenoxaprop-éthyle (II), de son isomère optiquement actif (D+)fenoxaprop-P-éthyle (III) ou d'un mélange des produits actifs,
elle contient
0,5 à 30 % en masse d'éthers polyglycoliques d'alcools gras en C₁₀-C₁₈ ou d'éthers polyglycoliques d'(alkyl en C₈-Cg)phényle, qui sont éthoxylés 6 à 10 fois, comme agents tensioactifs et,
dans le cas de formulations de type EC,
0,5 à 7 % en masse d'un (alkyl en C_{S}-C₁₄)benzènesulfonate de calcium, et, dans le cas de formulations de type EW, comme agent dispersant,
0,5 à 7 % en masse d'un copolymère à blocs oxyde d'éthylène-oxyde de propylène-oxyde d'éthylène phosphorylé en position a et ω ou d'un de ses sels,
en plus des constituants classiques de formulations,
les formulations de type EC ne contenant pas d'autres produits herbicides en plus des produits actifs l, II, III ou de leur mélange,
et les formulations de type EC qui contiennent une combinaison de l'herbicide fenoxaprop-éthyle ou fenoxaprop-P-éthyle avec l'herbicide diclofop-méthyle, et comme agents tensioactifs une combinaison d'éther polyglycolique d'alkylphényle et d'alkylbenzènesulfonate de calcium, étant exclues.

2. Procédé selon la revendication 1, caractérisé en ce que les compositions herbicides contiennent comme agents tensioactifs des éthers polyglycoliques d'alcools gras en C₁₀-C₁₄ éthoxylés 6 à 10 fois.

3. Procédé selon la revendication 1 ou 2, caractérisé en ce que les compositions herbicides contiennent comme agent tensioactif un éther polyglycolique d'isotridécanol éthoxylé 6 à 10 fois.

4. Procédé selon l'une ou plusieurs des revendications 1 à 3, caractérisé en ce que, dans le cas de formulations de type EC, les compositions herbicides contiennent un (alkyl en C₁₀-C₁₂)benzènesulfonate de calcium.

5. Procédé selon l'une ou plusieurs des revendications 1 à 4, caractérisées en ce que, dans le cas de formulations de type EC, les compositions herbicides contiennent du dodécylbenzènesulfonate de calcium.

6. Procédé selon l'une ou plusieurs des revendications 1 à 3, caractérisé en ce que, dans le cas de formulations de type EW, les compositions herbicides contiennent comme agent dispersant un copolymère à blocs de formule IV 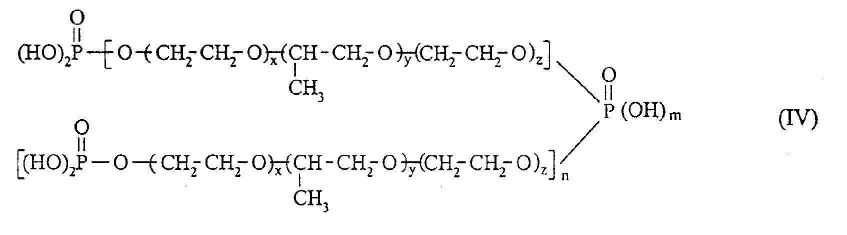 dans laquelle x, y et z sont indépendamment l'un de l'autre un nombre de 2 à 200 et m et n sont égaux à 0, 1 ou 2, le somme n+m devant être égale à 2.

7. Utilisation d'agents tensioactifs pour augmenter l'activité de l'herbicide diclofop-méthyle (I), fenoxaprop-éthyle (II) ou (D+)fenoxaprop-P-éthyle (III), caractérisée en ce que, en plus de 1 à 40 parties en masse d'herbicide, on utilise comme agents tensioactifs 0,5 à 30 parties en masse d'éthers polyglycoliques d'alcools gras en C₁₀-C₁₈ ou d'éthers polyglycoliques d'(alkyl en C₈-C₉)phényle, qui sont éthoxylés 6 à 10 fois, et 0,5 à 7 parties en masse d'un (alkyl en C_{S}-C₁₄)benzènesulfonate de calcium ou 0,5 à 7 parties en masse d'un copolymère à blocs oxyde d'éthylène-oxyde de propylène-oxyde d'éthylène phosphorylé en position a et ω ou d'un de ses sels.
